# EUROPEAN PATENT APPLICATION

(11) **EP 1 652 425 A1**
(43) Date of publication of application: **03.05.2006**
(21) Application number: 04425804.4
(22) Date of filing: 28.10.2004
(51) Int. Cl.: A01K 13/00

(54) **Apparatus for drying animals**

(71) Applicant: Hebla s.a.s di Ghersetti Manlio & C., 20042 Albiate MI (IT)
(72) Inventor: Ghersetti, Manlio, 20055 Renate Brianza MI (IT)
(74) Representative: Pizzoli, Antonio

(57) **Abstract**

Apparatus for drying animals (4), which comprises ventilation means (1) emitting air towards an animal (4) to be dried through at least one duct (2) and a mobile diffuser (3) which includes a substantially dome-shaped expansion chamber, which comprises at least one concave surface provided with one or more openings (6) through which the hot air coming from the duct (2) is expelled toward the animal (4) to be dried.

## Description

The present invention relates to an apparatus for drying animals, and in particular to an apparatus for quickly drying dogs and cats after their washing.

DE-A-3404282 discloses an apparatus comprising ventilation means which emit hot air through a flexible tube which can be manually oriented by an operator toward the animal to be dried. Since the flexible tube is not provided with a diffuser, the hot air hits the animal in a localized and relatively violent manner, so that the animal is disturbed and must be permanently controlled by an operator.

US 5067444 and FR-A-2580467 disclose apparatuses comprising a diffuser of hot air consisting of a perforated top on which the animal to be dried is placed. These apparatuses, even if they are more comfortable than the previous one, disperse much hot air in the environment and have a low drying efficiency, especially of the upper portion of the animal, since the diffuser is fixed.

DE-U-9417512 discloses a cabin in which hot air is introduced by a fixed diffuser arranged in the upper wall. This apparatus may cause a claustrophobia sense in the animal, has a low drying efficiency of its lower portion and hampers the control of the operator on the animal to be dried. Furthermore, the noise of the blowers arranged in the cabin is maddening for the animal.

An object of the present invention is therefore to provide an apparatus which is free from said drawbacks. This object is achieved with an apparatus, the main features of which are specified in the first claim and other features are specified in the subsequent claims.

Thanks to its particular air diffuser, the apparatus according to the present invention can dry the animal in a quick, uniform and silent manner, without problems for the animal and/or the operator. As a matter of fact, the concave shape and the mobile support structure of the diffuser allow to orientate in a precise and uniform manner the airflow on the animal, without necessarily shutting it up in a cabin.

According to a particular aspect of the invention, a vertical wall can be arranged behind the animal to be dried, so as to contain the hot air and to increase the drying efficiency of the apparatus, especially if the diffuser has a shape of a cylindrical sector.

According to another particular aspect of the invention, the hot air can be emitted by the diffuser through a membrane which attenuates the noise, is soft for the animal in case of contact and can be easily removed after the use for being washed.

According to a further particular aspect of the invention, the diffuser can be suspended from the top by means of an articulated arm, so as to simplify its movements in all directions before, during and after the use.

Further advantages and features of the apparatus according to the present invention will become clear to those skilled in the art from the following detailed and non-limiting description of an embodiment thereof with reference to the attached drawings, wherein:
- figure 1 shows a perspective view of the apparatus; and
- figure 2 shows an enlarged cross-sectioned view of detail II of the apparatus of figure 1.

Referring to said figures, it is seen that the apparatus according to the present invention comprises in a known way ventilation means, in particular a blower 1, which emit hot air through at least one connection duct 2, for example a flexible tube, and a diffuser 3 toward an animal 4 to be dried placed on a top 5.

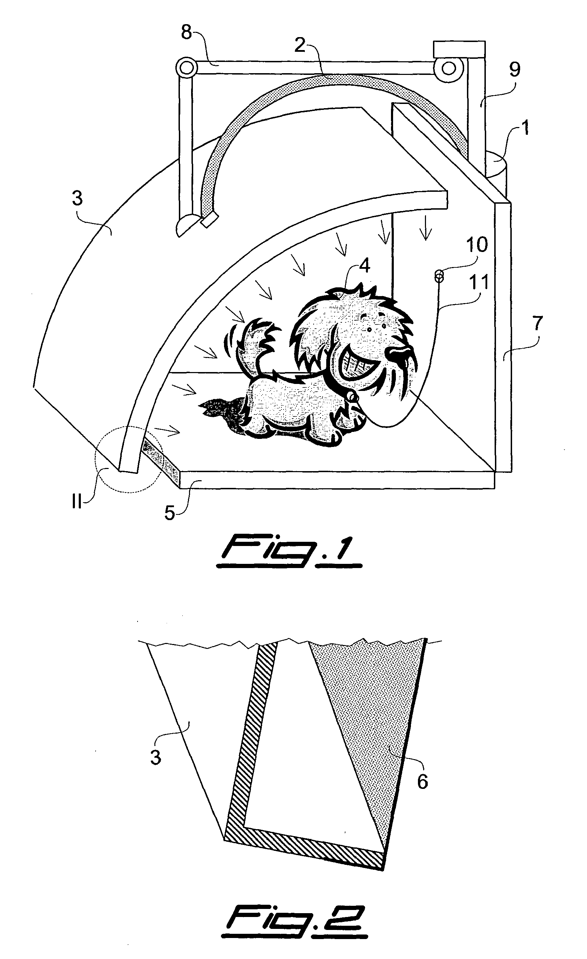

According to the invention, diffuser 3 includes a substantially dome-shaped expansion chamber, which comprises at least one concave surface provided with one or more openings through which the hot air coming from duct 2 is expelled toward animal 4 to be dried, as shown by the arrows of figure 1. In particular, said concave surface is almost completely open and is covered by at least one membrane 6 provided with pores or holes and preferably made of cotton, which is fixed in a removable manner to the lateral walls of diffuser 3 for following the concave profile of its inner surface. Duct 2 is connected to a connector arranged in the middle of diffuser 3 on the side opposite to membrane 6. In the present embodiment, diffuser 3 has the shape of a cylindrical sector with the longitudinal axis oriented in a substantially horizontal manner. At least one rear wall 7 is arranged beside top 5 on which animal 4 is placed, so that the latter is comprised between diffuser 3 and wall 7.

Diffuser 3 is preferably suspended from the top by means of an articulated arm 8 mounted on a vertical support 9 arranged behind and/or above wall 7. Wall 7 can further be provided with hooking means 10 for fastening animal 4 through a leash 11. In an alternative embodiment, the articulated arm 8 can be provided with wall fixing means, for example to the same wall 7 or to another wall.

## Claims

1. Apparatus for drying animals (4), which comprises ventilation means (1) emitting air towards an animal (4) to be dried through at least one duct (2) and a mobile diffuser (3), **characterized in that** the diffuser (3) includes a substantially dome-shaped expansion chamber, which comprises at least one concave surface provided with one or more openings (6) through which the hot air coming from the duct (2) is expelled toward the animal (4) to be dried.

2. Apparatus according to the previous claim, **characterized in that** the concave surface of the diffuser (3) is covered by at least one membrane provided with pores or holes (6).

3. Apparatus according to the previous claim, **characterized in that** the membrane (6) is fixed in a removable manner to the diffuser for following the concave profile of its inner surface.

4. Apparatus according to one of the previous claims, **characterized in that** the duct (2) is connected to a connector arranged in the middle of the diffuser (3) on the side opposite to the membrane (6).

5. Apparatus according to one of the previous claims, **characterized in that** the diffuser (3) has the shape of a cylindrical sector with the longitudinal axis oriented in a substantially horizontal manner.

6. Apparatus according to one of the previous claims, **characterized in that** a rear wall (7) is arranged beside the top (5) on which the animal (4) is placed, so that the latter is comprised between the diffuser (3) and the wall (7).

7. Apparatus according to the previous claim, **characterized in that** the rear wall (7) is provided with hooking means (10) for fastening the animal (4) through a leash (11).

8. Apparatus according to one of the previous claims, **characterized in that** the diffuser (3) is suspended from the top by means of an articulated arm (8).

9. Apparatus according to the previous claim, **characterized in that** the articulated arm (8) is mounted on a vertical support (9) arranged behind and/or above the rear wall (7).

10. Apparatus according to the claim 8, **characterized in that** the articulated arm (8) is provided with wall fixing means.
